# NEUE EUROPÄISCHE PATENTSCHRIFT

(11) **EP 0 685 723 B2**
(45) Veröffentlichungstag und Bekanntmachung des Hinweises auf die Entscheidung über den Einspruch: **28.02.2007**
(45) Hinweis auf die Patenterteilung: 08.08.2001
(21) Anmeldenummer: 95107063.0
(22) Anmeldetag: 10.05.1995
(51) Int. Cl.: G01M 15/00, G01M 17/007, G01R 31/00

(54) **Vorrichtung zur Diagnose von Kraftfahrzeugen**
Device for diagnosing motor vehicles
Dispositif pour la diagnose de véhicules

(30) Priorität: 01.06.1994 DE 4419189
(43) Veröffentlichungstag der Anmeldung: 06.12.1995
(73) Patentinhaber: ROBERT BOSCH GMBH, 70442 Stuttgart (DE)
(72) Erfinder: Dinse, Klaus, Ing., D-74348 Lauffen (DE); Nemec, Dieter, Ing., D-73092 Heiningen (DE); Tietgens, Ralph, Dipl.-Ing., D-73734 Esslingen (DE); Berntgen, Werner, Ing., D-72644 Oberboihingen (DE); Nitsche, Reiner, Ing., D-70178 Stuttgart (DE)

(56) Entgegenhaltungen:
- EP-A- 0 306 362
- WO-A-93/04353
- US-A- 3 889 273
- US-A- 4 602 127
- US-A- 4 931 964
- Fahrwerkvermessung in neuen, beispielhaften Dimensionen: Achsmess-Computer microline 4000, veröffentlicht im September 1991
- Fahrwerkvermessung in neuen, besipielhaften Dimensionen: Achsmess-Computer microline 4000, veröffentlicht im September 1991
- Bedienungsanleitung Fahrwerkvermessung, BMW Kinematikdiagnose System, veröffentlicht Juni 1992
- Beissbarth Rohé Preisliste vom 1. Juli 1991
- Betriebsanleitung "microtec 600 on car Balancer", Beissbarth , Seiten 5 bis 21 des Faxes, datiert 23.3.2006
- Urkunde "Bundespreis für hervorragende innovatorische Leistungen für das Handwerk", Beissbarth-Romeico, Seiten 3 und 4 des Faxes, datiert 23.3.2006
- Blätter "Infrarot-Elektronik-Multi-Kommunikation. Die neue Formel zum Wuchten am Wagen mit der Microtec 600 ", Beissbarth, Seiten 22 bis 27 des Faxes, datiert 23.3.2006

## Beschreibung

### Stand der Technik

Die Erfindung geht aus von einer Vorrichtung zur Diagnose von Kraftfahrzeugen nach der Gattung des Hauptanspruchs. Aus der Fachzeitschrift ELEKTRONIK 22, 1993, Seiten 64 und 66 ist eine gattungsgemäße Vorrichtung bekannt, die einen Handheld-Tester enthält, der auf gespeicherte Diagnose-Programme zurückgreift. Der Handheld-Tester wird an einem separaten Rechner, der als Feststation bezeichnet werden kann, mit den unterschiedlichen erforderlichen Diagnose-Programmen versorgt. Die Feststation entnimmt die Diagnose-Programme von einer CD-ROM, die vom Hersteller der Vorrichtung bereitgestellt wird. Aufgrund derbegrenzten Speicherkapazitätsind im Handheld-Tester nur die gerade benötigten Diagnose-Programme enthalten, deren Auswahl von dem Servicetechnikervor dem Einsatz des Handheld-Testers festgelegt wird. Muß auf ein Diagnose-Programm zurückgegriffen werden, das derzeit nicht im Handheld-Tester gespeichert ist, so muß der Handheld-Tester zum Laden der neuen Diagnose-Programme zur Feststation gebracht werden. Eine weitere Vorrichtung dieser Art ist bekannt aus US3889273A.

Der Erfindung liegt die Aufgabe zugrunde, eine Vorrichtung zur Diagnose von Kraftfahrzeugen anzugeben, die einfach handzuhaben ist.

Die Aufgabe wird durch die im unabhängigen Anspruch angegebenen Merkmale gelöst. Vorteile der Erfindung

Die erfindungsgemäße Vorrichtung weist den Vorteil auf, daß eine Verzögerung bei der Diagnose von Kraftfahrzeugen, die dadurch auftreten könnte, daß ein gerade benötigtes Diagnose-Programm im Handheld-Tester nicht vorhanden ist, vermieden wird. Vorgesehen sind sowohl im Handheld-Tester als auch in der Feststation angeordnete Sende-/Empfangseinrichtungen, die drahtlos zusammenwirken. Eine Datenanforderung vom Handheld-Tester und eine Datenübermittlung von der Feststation zum Handheld-Tester kann durchgeführt werden, ohne daß der Servicetechniker eingreifen muß. Der Servicetechniker kann sich daher uneingeschränkt auf die Diagnose konzentrieren.

Ein weiterer Vorteil der erfindungsgemäßen Vorrichtung liegt darin, daß die im Handheld-Tester zur Verfügung gestellte Speicherkapazität vergleichsweise gering sein kann. Mit dieser Maßnahme verringern sich die Herstellungskosten des Handheld-Testers.

Vorteilhafte Weiterbildungen und Ausgestaltungen der erfindungsgemäßen Vorrichtung ergeben sich aus abhängigen Ansprüchen.

Eine erste vorteilhafte Ausgestaltung sieht vor, daß die Sende-/Empfangseinrichtungen mit Infrarotstrahlung zusammenwirken. Die hohe Verfügbarkeit von leistungsstarken Infrarot-Komponenten ermöglicht eine preisgünstige Realisierung.

Eine andere vorteilhafte Ausgestaltung sieht vor, daß die Sende-/Empfangseinrichtungen mit Hochfrequenzstrahlung zusammenwirken. Der Vorteil einer hochfrequenten Funkverbindung liegt in der hohen Reichweite. Besonders geeignet ist eine oberhalb von etwa 100 MHz liegende Übertragungsfrequenz. Die geringe Wellenlänge ermöglicht die Realisierung von Antennen mit geringen Abmessungen. Die im höheren Frequenzbereich auftretende Richtwirkung wird durch in einem Werkstattgebäude auftretenden Reflexionen abgeschwächt. Die Verwendung einer hohen Frequenz ermöglicht den Einsatz einer hohen Bandbreite und entsprechend einer hohen zulässigen Datenübertragungsrate.

Eine vorteilhafte Weiterbildung sieht vor, daß die Feststation einen Massenspeicher, beispielsweise eine CD-ROM enthält. Die CD kann jederzeit, auch zum Beispiel automatisch (CD-Wechsler), gegen eine neue CD ausgetauscht werden, die neue Diagnose-Programme für neue Typen von Kraftfahrzeugen enthält. Es können auch mehrere CD-Laufwerke gleichzeitig in Betrieb sein.

Eine Ausgestaltung sieht vor, daß die Feststation mit einem Zentralrechner verbindbar ist, der die benötigten Diagnose-Programme bereitstellt. In dieser Ausgestaltung braucht die Feststation keinen Speicher zu enthalten. Die Feststation ohne eigenen Speicher dient lediglich als Verbindungsstelle zwischen der Sende-/Empfangseinrichtung in der Feststation einer weiteren Sende-/Empfangseinrichtung, die zur Kommunikation mit dem Zentralrechnervorgesehen ist. Die Verbindung zum Zentralrechner wird vorzugsweise über eine öffentliche Kommunikationsleitung hergestellt. Sofern in der Feststation ein Massenspeicher enthalten ist, muß auf den Zentralrechner nur gelegentlich, insbesondere zum Abrufen von neuen Diagnose-Programmen zurückgegriffen werden.

Weitere vorteilhafte Weiterbildungen und Ausgestaltungen ergeben sich aus weiteren abhängigen Ansprüchen in Verbindung mit der folgenden Beschreibung.

### Zeichnung

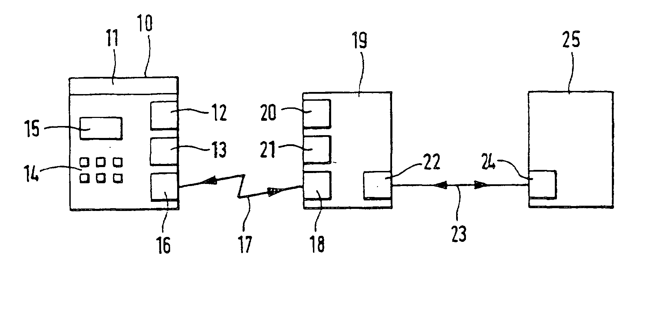

Die Figur zeigt ein Blockschaltbild einer erfindungsgemäßen Vorrichtung zur Diagnose von Kraftfahrzeugen.

Die Figur zeigt einen Handheld-Tester 10, der zur Diagnose von einem in der Figur nicht gezeigten Kraftfahrzeug vorgesehen ist. Der Handheld-Tester 10 ist über eine eingebaute Schnittstelle 11 mit dem Kraftfahrzeug verbindbar. Der Handheld-Tester 10 enthält einen Festwertspeicher 12, der die Daten zur Steuerung zumindest von Grundfunktionen enthält. Der Festwertspeicher 12 wird durch einen Diagnose-Programm-Speicher 13 ergänzt, der die wesentlichen, für die Diagnose des Kraftfahrzeugs erforderlichen Programme aufnimmt. Die Bedienung des Handheld-Testers ist mit einer Eingabevorrichtung 14, beispielsweise einer Tastaturmöglich. Diagnoseergebnisse und Fragen an den Servicetechniker können über eine Anzeigevorrichtung 15 angezeigt werden. Eine erste Sende/Empfangseinrichtung 16, die im Handheld-Tester 10 untergebracht ist, stellt eine drahtlose Verbindung zu einer zweiten Sende-/Empfangseinrichtung 18 her, die in einer Feststation 19 untergebracht ist.

Die Feststation 19 enthält einen Feststation-Festwertspeicher 20 sowie einen Feststation-Diagnose-Programm-Speicher 21. Eine in der Feststation 19 angeordnete dritte Sende-/Empfangseinrichtung 22 stellt eine Verbindung 23 zu einer vierten Sende-/Empfangseinrichtung 24 her, die in einem Zentralrechner 25 angeordnet ist.

Die erfindungsgemäße Vorrichtung arbeitet folgendermaßen:

Der zur Diagnose von Kraftfahrzeugen vorgesehene Handheld-Tester 10 führt die Diagnose aufgrund des im Diagnose-Programm-Speicher 13 hinterlegten Diagnose-Programms durch. Der Diagnose-Programm-Speicher 13 hat eine begrenzte Speicherkapazität, die zur Aufnahme von einigen Diagnose-Programmen ausreicht. Die Begrenzung der Speicherkapazität ermöglicht eine kleine Bauform des Handheld-Testers 10 und führt zu geringeren Herstellungskosten.

Der Handheld-Tester 10 fordert bei Bedarf oder insbesondere vorausschauend die benötigten Diagnose-Programme über die drahtlose Verbindung 17 von der Feststation 19 an. Die Information, welche zusätzlichen Diagnose-Programme erforderlich sind, oder auf welche Diagnose-Programme wahrscheinlich zugegriffen werden wird, kann in den Diagnose-Programmen selbst enthalten sein. Zusätzliche Informationen können im Festwertspeicher 12 hinterlegt sein.

Eine Anforderung eines neuen Diagnose-Programms aktiviert einen Sendeteil der ersten Sende-/ Empfangseinrichtung 16, der von einem Empfangsteil der zweiten Sende-/Empfangseinrichtung 18 empfangen wird.

Die drahtlose Verbindung 17 zwischen der ersten und der zweiten Sende-/Empfangseinrichtung 16, 18 ist beispielsweise als Infrarotverbindung realisierbar. Die Infrarotverbindung ist preisgünstig realisierbar, da auf zahlreiche, leicht erhältliche Komponenten zurückgegriffen werden kann.

In einer vorteilhaften Ausgestaltung ist die drahtlose Verbindung 17 als Hochfrequenz-Funkverbindung realisiert. Geeignet ist insbesondere eine Frequenz, die oberhalb von etwa 100 MHz liegt. In diesem Frequenzbereich können Antennen realisiert werden, die bei geringen Abmessungen gute elektrische Werte erzielen. Die Festlegung der Frequenz auf Werte von oberhalb von einigen 100 MHz oder im GHz-Bereich führt zu einer Richtwirkung der abgestrahlten Hochfrequenz, die aber durch Reflexionen innerhalb einer Werkstatt abgeschwächt wird.

Die Festlegung der Übertragungsfrequenz der drahtlosen Verbindung 17 auf hohe Werte eröffnet die Verwendungsmöglichkeit von hohen Bandbreiten, die eine hohe Datenübertragungsrate ermöglichen.

Zur Steuerung der Feststation 19 ist der Feststation-Festwertspeicher 20 vorgesehen, während die Diagnose-Programme vorzugsweise im Feststation-Diagnose-Programm-Speicher 21 hinterlegt sind. Der Feststation-Diagnose-Programm-Speicher 21 ist ein Massenspeicher, der beispielsweise als CD-ROM realisiert ist. Die CD kann in bestimmten Abständen vom Hersteller gegen eine neue Version ausgetauscht werden, so daß stets aktuelle Diagnose-Programme und Informationen (Informationssystm) zur Verfügung gestellt werden können. Die Feststation 19 ist in einer Werkstatt lediglich einmal erforderlich und kann mit mehreren Handheld-Testern 10 zusammenwirken.

In einer Weiterbildung ist vorgesehen, daß die Feststation 19 über die dritte Sende-/Empfangseinrichtung 22 eine Verbindung herstellt zu dem Zentralrechner 25, der die vierte Sende-/Empfangseinrichtung 24 enthält. Der Zentralrechner 25 ist beispielsweise beim Hersteller der erfindungsgemäßen Vorrichtung vorhanden. Denkbar ist es auch, daß bei unterschiedlichen Kraftfahrzeugherstellern solche Zentralrechner 25 vorhanden sind, auf die wahlweise zurückgegriffen werden kann. Die Verbindung 23 zwischen der dritten und vierten Sende-/Empfangseinrichtungen 22, 24 ist vorzugsweise eine öffentliche Kommunikationsverbindung, beispielsweise eine Telefonleitung, eine Richtfunkstrecke oder eine Verbindung über Satelliten. Der Zentralrechner 25 stellt die neuesten Versionen von Diagnose-Programmen sowie gegebenenfalls weiteren Informationen bereit.

Im Zusammenwirken der Feststation 19 mit dem Zentralrechner 25 kann die Feststation 19 ohne einen eigenen Feststation-Diagnose-Programm-Speicher 21 ausgebildet sein. Die Aufgabe einer solchen Feststation 19 besteht dann hauptsächlich darin, als Schnittstelle zwischen der drahtlosen Verbindung 17 und der Verbindung 23 zu arbeiten. Vorzugsweise enthält die Feststation 19 den Feststation-Diagnose-Programm-Speicher 21, damit nicht bei jeder Anforderung vom Handheld-Tester 10 jedesmal die im allgemeinen kostenpflichtige Verbindung 23 aufbauen muß. Die Verbindung 23 kann dann gezielt hergestellt werden, um die neuesten Diagnose-Programme vom Zentralrechner 25 abzufragen und im Feststation-Diagnose-Programm-Speicher 21 zu hinterlegen.

## Patentansprüche

1. Anspruch 1 des Hilfsantrags Vorrichtung zur Diagnose von Kraftfahrzeugen, mit einem Handheld-Tester, der einen Speicher enthält, dessen Daten austauschbar sind, mit einer Feststation zum Bereitstellen dieser Daten, wobei zur Datenanforderung vom Handheld-Tester (10) und zur Datenübermittlung von der Feststation (19) zum Handheld-Tester (10) im Handheld-Tester (10) und in der Feststation (19) jeweils Sende-/Empfangseinrichtungen (16, 18) vorgesehen sind,
wobei der Speicher einen Diagnose-Programm-Speicher (13) aufweist, so dass der Handheld-Tester aufgrund eines im Diagnose-Programm-Speicher (13) hinterlegten Diagnose-Programms die Diagnose durchführen kann, **dadurch gekennzeichnet, daß** die Datenanforderung, bei Bedarf oder vorausschauend, zum Empfang zumindest eines neuen Diagnose-Programms erfolgt, und daß die Sende-/Empfangseinrichtungen drahtlos zusammenwirken.

2. Vorrichtung nach Anspruch 1, **dadurch gekennzeichnet, daß** zwischen den Sende-/Empfangseinrichtungen (16, 18) eine Infrarot-Verbindung vorgesehen ist.

3. Vorrichtung nach Anspruch 1, **dadurch gekennzeichnet, daß** zwischen den Sende-/Empfangseinrichtungen (16, 18) eine Hochfrequenz-Funkverbindung vorgesehen ist.

4. Vorrichtung nach Anspruch 3, **dadurch gekennzeichnet, daß** die Übertragungsfrequenz oberhalb von etwa 100 MHz liegt.

5. Vorrichtung nach Anspruch 1, **dadurch gekennzeichnet, daß** die Feststation einen Feststation-Diagnose-Programm-Speicher (21) enthält.

## Claims

1. Device for motor vehicle diagnosis, having a hand-held tester which contains a memory whose data are exchangeable, having a fixed station for the provision of these data, transmitting/receiving devices (16, 18) being provided in each case in the hand-held tester (10) and in the fixed station (19) for requesting data from the hand-held tester (10) and for communicating data from the fixed station (19) to the hand-held tester (10), the memory having a diagnostic program memory (13), so that the hand-held tester can carry out the diagnosis on the basis of a diagnostic program stored in the diagnostic program memory (13), **characterized in that** the data are requested, as required or in anticipation, for the receipt of at least one new diagnostic program, and **in that** the transmitting/receiving devices interact in a wire-free manner.

2. Device according to Claim 1, **characterized in that** an infrared connection is provided between the transmitting/receiving devices (16, 18).

3. Device according to Claim 1, **characterized in that** a high-frequency radio connection is provided between the transmitting/receiving devices (16, 18).

4. Device according to Claim 3, **characterized in that** the transmission frequency lies above about 100 MHz.

5. Device according to Claim 1, **characterized in that** the fixed station contains a fixed station diagnostic program memory (21).

## Revendications

1. Dispositif de diagnostic de véhicules automobiles comportant un appareil testeur à main équipé d'une mémoire dont les données peuvent être échangées, un poste fixe pour fournir ces données,
selon lequel, l'appareil testeur (10) et le poste fixe (19) comportent respectivement des installations d'émission/réception (16, 18), pour émettre
- une requête de données pou l'appareil testeur (10) et pour transmettre des données par le poste fixe (10) vers l'appareil testeur (10),
- la mémoire comporte une mémoire de programme de diagnostic (13) pour que l'appareil testeur puisse effectuer le diagnostic à l'aide d'un programme de diagnostic enregistré dans la mémoire de programme de diagnostic (13),
**caractérisé en ce que**
- la requête de données se fait à la demande ou de manière prévisionnelle, pour la réception d'au moins un nouveau programme de diagnostic et les installations d'émission/réception coopèrent par une liaison sans fil.

2. Dispositif selon la revendication 1,
**caractérisé par**
une liaison infrarouge entre les installations d'émission/réception (16, 18).

3. Dispositif selon la revendication 1,
**caractérisé par**
une liaison radio haute fréquence entre les installations d'émission/réception (16, 18).

4. Dispositif selon la revendication 3,
**caractérisé en ce que**
la fréquence de transmission est supérieure à 100 MHz.

5. Dispositif selon la revendication 1,
**caractérisé en ce que**
le poste fixe comporte une mémoire de programme de contrôle de poste fixe (21).
